# EUROPÄISCHE PATENTSCHRIFT

(11) **EP 1 656 570 B1**
(45) Veröffentlichungstag und Bekanntmachung des Hinweises auf die Patenterteilung: **23.02.2011**
(21) Anmeldenummer: 04766472.7
(22) Anmeldetag: 11.08.2004
(51) Int. Cl.: G01S 15/93

(54) **VERFAHREN UND VORRICHTUNG ZUR DETEKTION VON SICH IN ANNÄHERND GLEICHER RAUMRICHTUNG ZU EINEM FAHRZEUG BEWEGENDEN OBJEKT**
METHOD AND DEVICE FOR THE DETECTION OF OBJECTS MOVING APPROXIMATELY IN THE SAME SPATIAL DIRECTION AS A VEHICLE
PROCEDE ET DISPOSITIF POUR DETECTER DES OBJETS SE DEPLA ANT PRATIQUEMENT DANS LA MEME DIRECTION SPATIALE PAR RAPPORT A UN VEHICULE

(30) Priorität: 12.08.2003 DE 10336964
(43) Veröffentlichungstag der Anmeldung: 17.05.2006
(73) Patentinhaber: ROBERT BOSCH GMBH, 70442 Stuttgart (DE)
(72) Erfinder: SCHLICK, Michael, 71229 Leonberg (DE); SCHMID, Dirk, 75397 Simmozheim (DE); GRUENEWALD, Andreas, 73230 Kirchheim u. Teck Nabern (DE)
(86) Internationale Anmeldenummer: PCT/EP2004/051769
(87) Internationale Veröffentlichungsnummer: WO 2005/015260

(56) Entgegenhaltungen:
- WO-A-03/012475

## Beschreibung

### Technisches Gebiet

Die Erfindung betrifft ein Verfahren und eine Vorrichtung mit den in den Oberbegriffen der Ansprüche 1 und 7 genannten Merkmalen.

### Stand der Technik

Vorrichtungen zur Detektion von Objekten im Toten Winkel eines Fahrzeugs, auch so genannte Blind-Spot-Detektionssysteme (BSD-Systeme), dienen im Allgemeinen der elektronischen Erkennung von Objekten im Toten Winkel eines Fahrzeugs, welche der Führer des Fahrzeugs nur durch Drehen seines Kopfes zur Seite wahrnehmen könnte. Ein solches Drehen des Kopfes (Schulterblick) ist wegen der einhergehenden Vernachlässigung des vorausliegenden Straßenverkehrsgeschehens in vielen Fällen nicht möglich. Insbesondere auf mehrspurigen Fahrbahnen soll es dem Fahrer eines Fahrzeugs durch ein BSD-System signalisiert werden, wenn ein anderes Fahrzeug (Objekt) mit Differenzgeschwindigkeit überholt beziehungsweise aufgrund einer relativ hohen Differenzgeschwindigkeit zeitnah überholen wird, so dass ein Wechseln der Fahrspur aufgrund der bestehenden Kollisionsgefahr vermieden werden sollte. Durch eine solche dem Fahrer zur Verfügung stehende Information kann die Unfallgefahr durch Übersehen anderer Fahrzeuge beim Spurwechsel verringert werden.

Zur Erkennung fremder Fahrzeuge (Objekte) beziehungsweise zur Evaluierung von Kollisionsszenarien werden nach dem Stand der Technik Sensoren am Fahrzeug eingesetzt, welche mit Hilfe von Ultraschall, Radar oder Lichtwellen das Vorhandensein von Objekten berührungslos detektieren und weiterhin den Abstand des Fahrzeugs zu den Objekten messen können.

Aus US 5,583,495 ist eine Vorrichtung zur Detektion von Objekten im Toten Winkel eines Fahrzeugs bekannt. Mittels eines Signalgenerators werden individuelle Ultraschallwellen in einem vorgegebenen Winkel generiert. Die an einem potentiellen Objekt reflektierten beziehungsweise gestreuten Ultraschallwellen werden mittels eines Ultraschallempfängers detektiert und verstärkt. Aus diesem Ultraschallsignal, der Geschwindigkeit des Fahrzeugs und dem Lenkwinkel des Fahrzeugs wird ein potentieller Kollisionszeitpunkt zwischen dem Objekt und dem eigenen Fahrzeug berechnet. Weiterhin weist die aus US 5,583,495 bekannte Vorrichtung Mittel zur Kommunikation mit dem Fahrer auf, welche im Falle einer wahrscheinlichen Kollision mit einem im Toten Winkel befindlichen Objekt einen Alarm auslösen oder den Fahrer in anderer geeigneter Weise informieren.

Weiterhin ist aus US 5,339,075 eine Vorrichtung zum Alarmieren des Führers eines Fahrzeugs für den Fall bekannt, dass sich ein anderes Fahrzeug neben dem Fahrzeug (in der benachbarten Fahrspur) befindet. Dadurch, dass ein Ultraschall-Sender Ultraschallwellen emittiert, welche von einem potentiell benachbarten Fahrzeug reflektiert werden und das reflektierte Signal mittels eines Ultraschall-Empfängers detektiert und ausgewertet wird, kann auf das Vorhandensein von Objekten (Fahrzeugen) in einem vorher festgelegten Messbereich geschlossen werden.

Nachteilig an den bekannten radar- oder videobasierten Blind-Spot-Detektionssystemen ist vor allem der hohe Kostenaufwand, welcher bei Verwendung von kostspieligen Radar- oder Lichtsensoren zu einem erheblichen Kostennachteil führt. Die aktiven ultraschallbasierten BSD-Systeme weisen nachteilhafterweise eine relativ hohe Reaktionszeit auf, was bei Relativgeschwindigkeiten größer als 30 km/h aufgrund zu langer Zykluszeiten und Schallverwehungen zu einem Ausfall des Systems führen kann.

Die WO 03/012475 zeigt ein Verfahren zur Ermittlung eines stationären oder bewegten Objekts, bei dem von dem Objekt abgestrahlte oder an einem anderen Ort reflektierte akustische Signale erfasst werden, anhand derer das betreffende Objekt detektiert, bewertet oder identifiziert wird. Somit kann ein sich bewegendes Objekt wie z. B. ein Fahrzeug akustisch anhand von Eigengeräuschen oder Fremdgeräuschen hinsichtlich seines eigenen Bewegungsablaufs erfasst werden. Zur Erfassung sind Schallsensoren vorgesehen.

### Darstellung der Erfindung, Aufgabe, Lösung, Vorteile

Es ist daher Aufgabe der vorliegenden Erfindung, ein Verfahren und eine Vorrichtung anzugeben, mit welchen das Vorhandensein von Objekten (Fahrzeugen) im Toten Winkel eines Fahrzeugs vor allem bei hohen Fahr- und/oder Differenzgeschwindigkeiten (Relativgeschwindigkeit) zwischen dem Objekt und dem Fahrzeug sicher und kostengünstig detektiert werden kann.

Diese Aufgabe wird erfindungsgemäß gelöst durch die Merkmale im kennzeichnenden Teil des Anspruchs 1 (Verfahrensanspruch) und des Anspruchs 7 (Vorrichtungsanspruch) im Zusammenwirken mit den Merkmalen im Oberbegriff. Zweckmäßige Ausgestaltungen sind in den Unteransprüchen enthalten.

Dadurch, dass der Luftdruck an mindestens einem Punkt des Fahrzeugs über ein vorgegebenes Zeitintervall oder vorgegebene Zeitintervalle detektiert wird und die Position des Objekts oder der Objekte relativ zum Fahrzeug durch Auswertung des Signalverlaufs des Luftdrucks bestimmt wird, kann insbesondere bei hohen Fahrgeschwindigkeiten größer als 30 km/h eine sichere Detektion von im Toten Winkel befindlichen Objekten (Fahrzeugen) realisiert werden. Besonders vorteilhaft hieran ist es, dass kostengünstige Schall- beziehungsweise Ultraschallsensorik für die Detektion der Objekte im Toten Winkel des Fahrzeugs verwendet werden kann. Vorzugsweise ist es vorgesehen, dass bereits vorhandene Sensoren, wie sie beispielsweise in einem Fahrzeug, welches über eine Einparkhilfe oder eine Parklückenvermessung verfügt, vorhanden sind, für das erfindungsgemäße Verfahren Verwendung finden.

Der Luftdruck wird vorzugsweise mittels eines Schallsensors detektiert und das Schallsignal wird vorzugsweise im Ultraschall-Frequenzbereich mittels eines Ultraschallsensors detektiert. Der Signalverlauf des Luftdrucks wird mit vorab ermittelten Messwerten verglichen und hieraus die Position des Objekts oder der Objekte relativ zum Fahrzeug ermittelt.

In einer besonders bevorzugten Ausführungsvariante wird der Luftdruck an mindestens zwei bezüglich der Längsachse des Fahrzeugs beabstandeten Punkten detektiert, wobei der Abstand der beiden Punkte vorzugsweise mindestens einen Meter beträgt. Um eine Unterscheidung von sich mit hoher Differenzgeschwindigkeit annähernden Objekten gleicher Fahrtrichtung von sich mit hoher Differenzgeschwindigkeit annähernden Objekten der Gegenfahrbahn zu realisieren, ist es erfindungsgemäß vorgesehen, die Bewegungsrichtung des Objekts oder der Objekte durch den zeitlichen Vergleich, vorzugsweise die Korrelation der Signalverläufe der einzelnen beabstandeten Messpunkte zu bestimmen.

Eine erfindungsgemäße Vorrichtung zur Detektion von sich annähernden Objekten im Toten Winkel eines Fahrzeugs weist erfindungsgemäß Mittel zur Detektion des Luftdrucks und Mittel zur Auswertung des Signalverlaufs des Luftdrucks und Bestimmung der Position des Objekts oder der Objekte relativ zum Fahrzeug auf. Erfindungsgemäß ist es vorgesehen, bei Detektion eines Objekts im Toten Winkel eines Fahrzeugs eine Warnung an den Führer des Fahrzeugs für den Fall auszugeben, in welchem der Fahrer einen Wechsel der Fahrspur, beabsichtigt (Kriterium z.B. Blinkerbetätigung).

Erfindungsgemäß ist vorgesehen, dass die Mittel zur Detektion rechts und/oder links am Heck des Fahrzeuges mit Hauptausrichtung zur entsprechenden Seite angeordnet sind und/oder dass zusätzlich Mittel zur Detektion rechts und/oder links an der Front des Fahrzeuges mit Hauptausrichtung zur entsprechenden Seite angeordnet sind. Dabei ist erfindungsgemäß vorgesehen, dass die Mittel zur Detektion einen Schallsensor aufeweist, wobei vorteilhafterweise der Schallsensor ein Ultraschallsensor ist.

Weitere bevorzugte Ausgestaltungen der Erfindung ergeben sich aus den in den Unteransprüchen genannten Merkmalen.

### Kurze Beschreibung der Zeichnungen

Nachstehend wird die Erfindung in einem Ausführungsbeispiel anhand der beigefügten Zeichnungen näher erläutert. Es zeigen in schematischen Darstellungen:
- Fig. 1: ein Fahrzeug mit erfindungsgemäßer Vorrich- tung und
- Fig. 2: einen Luftdruckverlauf am Sensor eines Fahr- zeugs in Abhängigkeit von der Distanz eines mit hoher Differenzgeschwindigkeit überholen- den Objekts.

### Bester Weg zur Ausführung der Erfindung

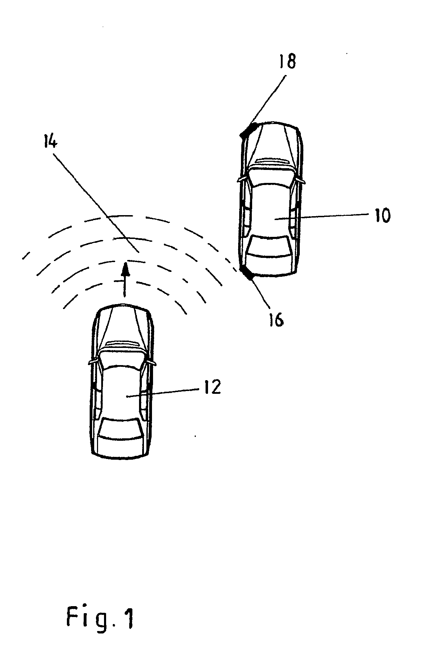

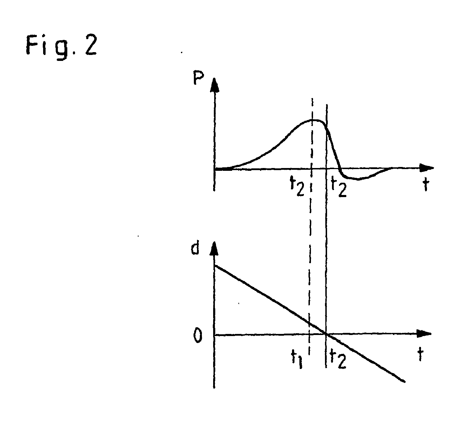

Ein Fahrzeug 10, welches über eine erfindungsgemäße Vorrichtung zur Detektion von sich im Toten Winkel des Fahrzeugs 10 bewegenden Objekten (Fahrzeug 12) verfügt, weist im Ausführungsbeispiel nach Fig. 1 zwei Schallsensoren 16, 18 auf, wobei der Schallsensor 16 am linken Heck des Fahrzeugs 10 und der Sensor 18 an der linken Front des Fahrzeugs 10 angeordnet ist. Die Schallsensoren 16, 18 detektieren den Luftdruck der Umgebung. Ein überholendes Fahrzeug 12 erzeugt eine Druckwelle 14, die einen Druckanstieg, gefolgt von einem Druckanfall an den Sensoren 16, 18 verursacht. Die Druckamplitude ist umso größer, je höher die Differenzgeschwindigkeit zwischen den Fahrzeugen 10 und 12 ist. Bei kleinen Differenzgeschwindigkeiten oder quasi statischen Fahrzeugen im Toten Winkel des Fahrzeugs 10 kann die erfindungsgemäße Detektionsmethode mangels auswertbarem Signal nicht angewendet werden. In diesen Fällen kann aber auf eine aktive Messung mittels Ultraschallabstandssensoren zurückgegriffen werden, die auch bei Parkassistenten (Parkpilot) eingesetzt werden und den Stand der Technik bilden. Das überholende Fahrzeug 12 schiebt eine "Luftwalze" vor sich her und erzeugt bei Annäherung an das Fahrzeug 10 einen Druckanstieg, welcher zunächst vom Sensor 16 und zeitlich gesehen später vom Sensor 18 detektiert wird. Während der Vorbeifahrt des Fahrzeugs 12 mit hoher Differenzgeschwindigkeit kehrt sich der Druckanstieg in einen Sog um, wie in Fig. 2 schematisch dargestellt ist.

In Fig. 2 ist der Luftdruckverlauf (p) am Sensor 16 schematisch in Abhängigkeit der Zeit (t) im oberen Diagramm dargestellt. Weiterhin ist der Abstand (d) zwischen den Fahrzeugen 10 und 12 bezogen auf die Querachse der Fahrzeuge im unteren Diagramm dargestellt. Aus der Fig. 2 wird ersichtlich, dass bei Annäherung des Fahrzeuges 12 an das Fahrzeug 10 mit hoher Differenzgeschwindigkeit zunächst ein Druckanstieg am Sensor 16 zu verzeichnen ist, welcher im Zeitpunkt t₁ zu einer maximalen Druckamplitude führt. In diesem Zeitpunkt t₁ befindet sich das Fahrzeug 12, welches sich mit hoher Differenzgeschwindigkeit fahrend im Toten Winkel des Fahrzeugs 10 befindet, jedoch noch nicht neben dem Fahrzeug 10. Im weiteren Verlauf der Annäherung des Fahrzeugs 12 an das Fahrzeug 10 (bezogen auf die Querachse der Fahrzeuge) fällt der Druck ab. Dieser Druckabfall lässt sich mittels der Schallsensoren 16, 18 detektieren und kann dazu benutzt werden, den Führer des Fahrzeugs 10 über ein entsprechendes Signal über das Vorhandensein eines Objekts (Fahrzeug 12) im Toten Winkel zu informieren. Sollte der Führer des Fahrzeugs 10 ein Wechsel der Fahrspur nach links (bezogen auf die Fahrtrichtung vorwärts) beabsichtigen, kann es ebenfalls vorgesehen sein, ein Warnsignal an den Fahrer des Fahrzeugs 10 abzugeben. Im Zeitpunkt t₂, in welchem sich die Fahrzeuge (bezogen auf ihre Querachse) auf gleicher Höhe befinden, ist der Druck bereits deutlich abgefallen. Beim weiteren Vorbeifahren des Fahrzeugs 12 am Fahrzeug 10 fällt der Druck aufgrund der Sogwirkung weiter ab. Um ein möglichst rechtzeitiges Detektieren des im Toten Winkel befindlichen Fahrzeuges 12 mit relativ hoher Differenzgeschwindigkeit zu realisieren, kann es alternativ vorgesehen sein, den bis zum Zeitpunkt t₁ erfolgenden Druckanstieg am Sensor 16 mit bereits vorher ermittelten Messwerten zu vergleichen, so dass aus der Charakteristik des Druckanstiegs auf eine durch ein sich näherndes Fahrzeug verursachte Luftdruckwelle und somit auf ein sich annäherndes Fahrzeug geschlossen werden kann.

Zur zuverlässigen Unterscheidung zwischen überholenden und entgegenkommenden Fahrzeugen ist es vorgesehen, neben dem Sensor 16 einen zusätzlichen Sensor 18 einzusetzen, der mindestens 1 Meter vom Sensor 16 entfernt, vorzugsweise an der Front des Fahrzeugs 10 angeordnet ist. Dabei ist es besonders vorteilhaft, den Sensor 18 an der Eckposition am vorderen Stoßfänger des Fahrzeugs 10 anzuordnen. Durch den zeitlichen Vergleich der Signalverläufe des Sensors 16 und des Sensors 18, beispielsweise durch Korrelation, kann die Bewegungsrichtung der Objekte bestimmt werden.

Zur Realisierung des erfindungsgemäßen Verfahrens ist die Verwendung von modifizierten, aktiven Ultraschallsensoren möglich, welche im Bereich der Einparkhilfe (Parkassistent) derzeit bereits in Fahrzeugen eingesetzt werden. Die Modifikation ermöglicht zusätzlich zum aktiven Betrieb die passive Auswertung von Umgebungsgeräuschen oder des Luftdrucks. Hierdurch kann eine sehr kostengünstige Ausführung der Erfindung (Detektion von Objekten im Toten Winkel des Fahrzeugs mit einer Differenzgeschwindigkeit größer als 30 km/h) realisiert werden, wobei dieselbe Sensorik sowohl für die Tote-Winkel-Detektion, die Parklückenvermessung als auch die Einparkhilfe-Funktion verwendet werden kann.

Die erfindungsgemäße Vorrichtung kann an der rechten Fahrzeugseite oder beidseitig angebracht werden. Ein Sensor am Heck ermöglicht die BSD Funktion mit Fehlwarnungen z.B. durch Gegenverkehr. Mit zwei Sensoren an einer Seite können diese Fehlwarnungen >90% durch die Richtungszuordnung des Fahrzeuges unterdrückt werden.

Die Erfindung ist nicht beschränkt auf die hier dargestellten Ausführungsbeispiele, vielmehr ist es möglich, durch Kombination und Modifikation der genannten Mittel und Merkmale weitere Ausführungsvarianten zu realisieren, ohne den Rahmen der Erfindung zu verlassen.

## Patentansprüche

1. Verfahren zur Detektion von sich in annähernd gleicher Raumrichtung zu einem Fahrzeug bewegenden Objekten,
**gekennzeichnet durch** folgende Verfahrensschritte:
- Detektion des Luftdrucks an mindestens einem Punkt des Fahrzeugs (10) über ein vorgegebenes Zeitintervall oder vorgegebene Zeitintervalle und
- Auswertung des Signalverlaufs bzw. der Signalverläufe des Luftdrucks, und Bestimmung des Vorhandenseins eines bzw. mehrerer sich annähernder Objekte dann, wenn nach einem Druckanstieg ein Druckabfall des Luftdrucks festgestellt wird oder der Signalverlauf bzw. die Signalverläufe mit vorab ermittelten Messwerten verglichen und daraus die Charakteristik des Druckanstiegs des Luftdrucks ermittelt wird.

2. Verfahren nach Anspruch 1,
**dadurch gekennzeichnet, dass**
der Luftdruck mittels eines Schallsensors (16, 18) detektiert wird.

3. Verfahren nach einem der vorhergehenden Ansprüche,
**dadurch gekennzeichnet, dass**
der Luftdruck an mindestens zwei, bezüglich der Längsachse des Fahrzeuges (10) beabstandeten Punkten detektiert wird.

4. Verfahren nach Anspruch 3,
**dadurch gekennzeichnet, dass**
der Abstand der zwei Punkte mindestens einen Meter beträgt.

5. Verfahren nach einem der vorhergehenden Ansprüche,
**dadurch gekennzeichnet, dass**
durch den zeitlichen Vergleich der Signalverläufe der einzelnen Messpunkte die Bewegungsrichtung des Objekts (12) oder der Objekte (12) bestimmt wird.

6. Verfahren nach Anspruch 5,
**dadurch gekennzeichnet, dass**
die Signalverläufe der einzelnen Messpunkte miteinander korreliert werden.

7. Vorrichtung zur Detektion von sich in annähernd gleicher Raumrichtung zu einem Fahrzeug bewegenden Objekten **gekennzeichnet durch**
- Mittel eingerichtet zur Detektion des Luftdrucks und
- Mittel eingereichtet zur Auswertung des Signalverlaufs des Luftdrucks und Bestimmung des Vorhandenseins eines bzw. mehrerer sich annähernder Objekte dann, wenn, nach einem Druckanstieg ein Druckabfall des Luftdrucks festgestellt wird oder der Signalverlauf bzw. die Signalverläufe mit vorab ermittelten Messwerten verglichen und daraus die Charakteristik des Druckanstiegs des Luftdrucks ermittelt wird.

## Claims

1. Method for the detection of objects moving approximately in the same spatial direction as a vehicle,
**characterized by** the following method steps:
- detection of the air pressure at at least one point on the vehicle (10) over a predefined time interval or predefined time intervals, and
- evaluation of the signal profile or of the signal profiles of the air pressure and determination of the presence of one or more approaching objects if, after a rise in pressure, a drop in the air pressure is detected or the signal profile or the signal profiles is/are compared with previously determined measured values and the characteristic of the rise in air pressure is determined therefrom.

2. Method according to Claim 1,
**characterized in that**
the air pressure is detected by means of a sound sensor (16, 18).

3. Method according to one of the preceding claims,
**characterized in that**
the air pressure is detected at at least two points which are at a distance from the longitudinal axis of the vehicle (10).

4. Method according to Claim 3,
**characterized in that**
the distance between the two points is at least one metre.

5. Method according to one of the preceding claims,
**characterized in that**
the direction of movement of the object (12) or of the objects (12) is determined through the chronological comparison of the signal profiles of the individual measuring points.

6. Method according to Claim 5,
**characterized in that**
the signal profiles of the individual measuring points are correlated with one another.

7. Device for the detection of objects moving approximately in the same spatial direction as a vehicle, **characterized by**
- means configured for the detection of the air pressure, and
- means configured for the evaluation of the signal profile of the air pressure and determination of the presence of one or more approaching objects if, after a rise in pressure, a drop in the air pressure is detected or the signal profile or the signal profiles is/are compared with previously determined measured values and the characteristic of the rise in the air pressure is determined therefrom.

## Revendications

1. Procédé de détection d'un objet qui se déplace vers un véhicule sensiblement dans la même direction spatiale que celle du déplacement de ce dernier, **caractérisé par** les étapes suivantes :
détection de la pression d'air en au moins un point du véhicule (10) pendant un intervalle de temps ou des intervalles de temps prédéterminés et
évaluation de l'évolution du signal ou des signaux de pression d'air, conclusion de la présence d'un ou de plusieurs objets qui se rapprochent si une chute de la pression d'air est constatée après une augmentation de sa pression ou comparaison de l'évolution du signal ou des signaux à des valeurs de mesure déterminées préalablement, la caractéristique de la montée en pression de l'air étant déterminée à partir de ces dernières.

2. Procédé selon la revendication 1, **caractérisé en ce que** la pression d'air est détectée à l'aide d'un détecteur acoustique (16, 18).

3. Procédé selon l'une des revendications précédentes, **caractérisé en ce que** la pression d'air est détectée en au moins deux points situés à distance l'un de l'autre suivant l'axe longitudinal du véhicule (10).

4. Procédé selon la revendication 3, **caractérisé en ce que** la distance entre les deux points est d'au moins un mètre.

5. Procédé selon l'une des revendications précédentes, **caractérisé en ce que** la comparaison dans le temps de l'évolution des signaux des différents points de mesure détermine la direction de déplacement de l'objet (12) ou des objets (12).

6. Procédé selon la revendication 5, **caractérisé en ce que** les évolutions des signaux des différents points de mesure sont corrélées les unes aux autres.

7. Dispositif de détection d'un objet qui se déplace vers un véhicule sensiblement dans la même direction spatiale que celle du déplacement de ce dernier, **caractérisé par**
des moyens destinés à détecter la pression de l'air et
des moyens destinés à évaluer l'évolution du signal de pression d'air et à déterminer la présence d'un ou plusieurs objets se rapprochant lorsqu'après une augmentation de pression, une chute de la pression d'air est constatée ou à comparer l'évolution du signal ou des signaux à des valeurs de mesure déterminées précédemment, pour déterminer à partir de là la caractéristique de l'augmentation de la pression de l'air.
